# EUROPEAN PATENT APPLICATION

(11) **EP 2 548 802 A2**
(43) Date of publication of application: **23.01.2013**
(21) Application number: 12176470.8
(22) Date of filing: 13.07.2012
(51) Int. Cl.: B64C 25/40

(54) **Aircraft versatile power system**

(30) Priority: 18.07.2011 ES 201131220
(71) Applicant: Airbus Operations S.L., 28906 Madrid (ES)
(72) Inventor: Casado Montero, Carlos, 28906 Getafe (ES); Ruiz Jiménez, Alfredo, 28906 Getafe (ES)
(74) Representative: Elzaburu Marquez, Alberto

(57) **Abstract**

An aircraft versatile power system (1) comprises an air breathing engine (2), a power converter (6), and a motor (4).

The power converter (6) transforms shaft motion provided by the air breathing engine (2) into another type of energy. The motor (4) uses the energy provided by the power converter (6) to move a motor shaft (14), and the motor shaft (14) turns the landing gear wheels (3), generating aircraft movement.

The air breathing engine (2) also produces thrust, enabling an aircraft dual propulsive operation either by the landing gear wheels (3) movement, or by direct thrust through the nozzle (25).

## Description

### OBJECT OF THE INVENTION

This invention discloses a versatile power system for aircraft, comprising an aircraft power unit which provides thrust and self-propelled landing gear wheels. It is included in the technical field of propulsion and power units for the aeronautic industry.

### PROBLEM TO BE SOLVED AND BACKGROUND OF THE INVENTION

Auxiliary power units (APU) are currently employed in commercial aircrafts in order to supply power when no other sources are available (main engines, ground power units, and so on). Common APU are turbo-shaft engines driving an electric generator and sometimes a pneumatic load compressor. The turbo-machines considered for this role generate no significant propulsive force as most of the power is extracted from the gas in order to drive the electric and pneumatic load. It is common practice in aircraft design to place the APU at the tailcone.

Standard aircraft procedures at airports require ground handling equipment to begin aircraft operations, like taxi tractors which are required when pushback is necessary to move the aircraft toward the taxiways. All this equipment increases operating cost. Furthermore, during taxi phase main engines must work out of their optimal performance conditions, requiring high fuel consumption. It is desirable to overcome all these disadvantages, by developing a new versatile power system suitable to produce aircraft movement on ground and thrust during some operation stages as well. Moreover, providing an APU with thrust features makes downsizing main engines possible, as additional thrust from APU is available for the most demanding mission phases.

Therefore, it is an object of the present invention to provide a versatile power unit suitable to overcome the previous mentioned drawbacks, reducing aircraft operating cost.

The state of the art presents references revealing several methods and systems to reduce cost during aircraft operation. Document WO 2007/053932 A1 discloses a method and a system for taxiing an aircraft, and it comprises a gas turbine engine having an electrical motor engaged with a low pressure spool of the engine. The low pressure spool has a propulsor which causes a major portion of the thrust for moving the aircraft during taxiing.

Document US 2008/0059053 A1 shows a method for reducing the turnaround time of an aircraft having at least one self-propelled undercarriage wheel, wherein turbines are turned off until takeoff or after landing.

Document EP 1 069 044 B1 reveals an auxiliary power unit which can provide auxiliary thrust when required.

However, no evidence has been found in the state of the art showing a versatile power system with the technical features disclosed in this invention.

### SUMMARY OF THE INVENTION

In order to achieve the objectives and to solve the aforementioned drawbacks, the invention has developed an aircraft versatile power system comprising,
- an air breathing engine, comprising a compressor, a combustion chamber, a turbine, and a nozzle, which supplies either thrust or shaft power, or both simultaneously; in some embodiments the air breathing engine also comprises a fan, therefore the air breathing engine may be a turbojet or a turbofan;
- a power converter, that transforms shaft motion into another type of energy;
- a motor, which is able to move a motor shaft;
where the power converter transforms mechanical energy from the shaft motion provided by the air breathing engine into another type of energy (electric, hydraulic, pneumatic) ; the motor uses the energy provided by the power converter to move the motor shaft either clockwise or counterclockwise, and the motor shaft turns landing gear wheels either clockwise or counterclockwise, producing the aircraft on-ground displacement forward or backward.

Such aircraft versatile power system works maintaining the air breathing engine operating in three different modes:
1) providing only power through a mechanical drive,
2) providing power through a mechanical drive, and also thrust through its nozzle,
3) providing only thrust through its nozzle.

The power converter transforms shaft motion from the air breathing engine into electric energy, hydraulic energy or pneumatic energy. The motor, in turn, can be an electric motor, a hydraulic motor or a pneumatic motor respectively.

The air breathing engine may be a turbojet or a turbofan. The air breathing engine has at least an air intake that provides air supply when open, and the air intake presents no additional aerodynamic drag when it is closed.

The invention also discloses a method to operate an aircraft, using a versatile power system which comprises:
- an air breathing engine, comprising a compressor, a combustion chamber, a turbine, and a nozzle, which supplies either thrust or shaft power, or both simultaneously; in some embodiments the air breathing engine also comprises a fan, therefore the air breathing engine may be a turbojet or a turbofan;
- a power converter, that transforms shaft motion into another type of energy;
- a motor, which is able to move a motor shaft either clockwise or counterclockwise;
where the power converter transforms mechanical energy from the shaft motion provided by the air engine into another type of energy (electric, hydraulic, pneumatic). The motor uses the energy provided by the power converter to move the motor shaft clockwise and counterclockwise. The motor shaft turns the landing gear wheels clockwise and counterclockwise, producing the aircraft on-ground displacement forward or backward. Such versatile power system can operate during each stage of the flight, among the following modes:
a) mode 1, where the air breathing engine works only as a turbo-shaft, driving power converters and providing shaft energy;
b) mode 2, where the air breathing engine works as in mode 1 providing shaft energy, and it also generates thrust through the nozzle; or,
c) mode 3, where the air breathing engine only generates thrust through the nozzle.

According to the method, during the boarding, parking and disembarking phases the versatile power system works in mode 1, providing power supply to the aircraft.

According to the method, during the pushback phase the versatile power system works in mode 1, providing power supply to the aircraft, and the aircraft is moved using the motor which turns the landing gear wheels, moving the aircraft towards a taxiway.

According to the method, during the taxiing phase the versatile power system works in mode 2, providing power supply and thrust to the aircraft, and the aircraft is moved using the motor and due to the thrust provided by the nozzle as well.

According to the method, during the take off and climb phases, the motor is switched off and thrust is provided by main engines, and the air breathing engine may either remain operative providing additional thrust (mode 3), or may be shut down.

According to the method, during cruise and descend flight phases the versatile power system normally works in mode 3.

In order to provide a better understanding of this specification, and being an integral part thereof, a series of figures in which the object of the invention has been represented with an illustrative and not limitative manner is attached.

### BRIEF DESCRIPTION OF THE DRAWINGS

The invention will be better understood from reading the following detailed description taken together with the drawings in which similar reference numbers are used to designate similar elements, and wherein:
- Figure 1 is a partial side view of an aircraft.
- Figure 2 shows the versatile power unit disclosed in this invention and its interaction with other on equipment.
- Figure 3 shows a schematic representation of the versatile power unit of the invention working at different modes, producing power generation, thrust, or both power generation and thrust.

A list of reference numbers used in the drawings is given hereinafter: 1 = versatile power system (VPS); 2 = air breathing engine, or versatile power unit (VPU); 3 = landing gear wheels; 4 = VPS motor; 5 = power distribution grid; 6 = VPS power converter; 7 = aircraft system ; 8 = VPS intake flap actuator; 9 = VPS air intake; 10 = air supply; 11 = mechanical drive; 12 = air breathing main engines; 13 = power transmission; 14 = motor shaft; 21 = fan; 22 = compressor; 23 = combustion chamber; 24 = turbine; 25 = nozzle.

### DETAILED DESCRIPTION

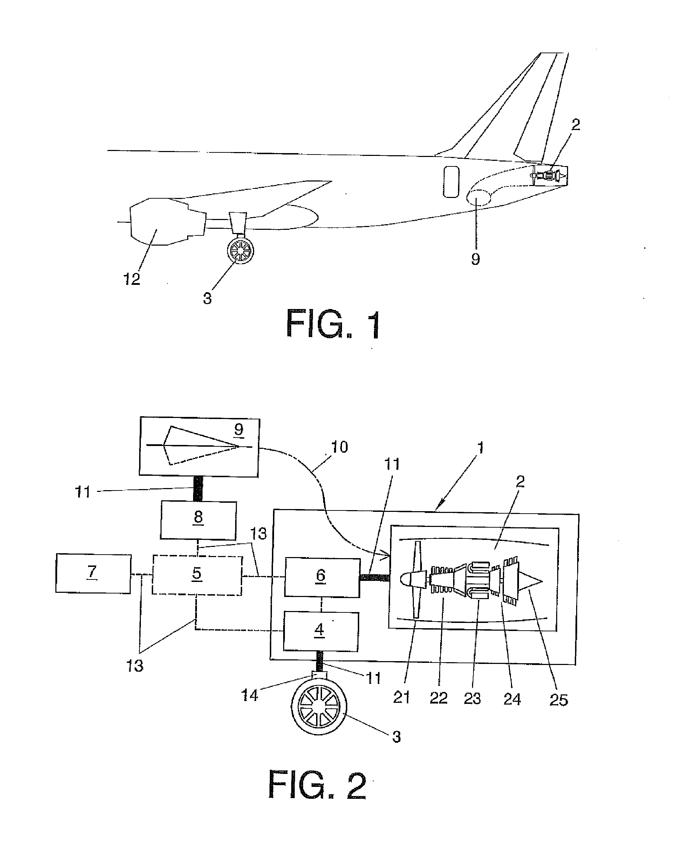

A description of the invention based on the aforementioned figures is made hereinafter. Figure 1 shows a partial side view of an aircraft having air breathing main engines (12) and an air breathing engine (2) at the tailcone. At least an air intake (9) provides air supply (10) to the air breathing engine (2). Figure 2 represents the relationship among the versatile power unit (2) and other aircraft systems.

The versatile power system (1) for aircraft disclosed by the invention is a combination of an air breathing engine (2) (a turbo-machine, usually a turbojet or a turbofan) installed at the aircraft tailcone, a power converter (6), and a motor (4) preferably installed nearby the landing gear wheels (3). When the air engine (2) turbo-machine is a turbojet, it comprises a compressor (22), a combustion chamber (23), a turbine (24), and a nozzle (25). When the air engine (2) turbo-machine is a turbofan, it comprises a fan (21), a compressor (22), a combustion chamber (23), a turbine (24), and a nozzle (25). The air breathing engine (2) turbo-machine works as a versatile power unit, due to the fact that it is a variable cycle turbo-machine which is able to produce either shaft energy through a mechanical drive (11), or thrust for the aircraft propulsion through the nozzle (25), or both simultaneously. Therefore, the air breathing engine (2) is also called versatile power unit (VPU).

The versatile power system, VPS, (1) operates in three different working modes.

In the first mode (mode 1) the air breathing engine (2) works as a turbo-shaft, driving the power converter (6) such as electric generators, hydraulic pumps or pneumatic compressors. Shaft power produced by the air breathing engine (2) is transferred to the power converter (6) through a mechanical drive (11). In addition, it is possible to extract pneumatic power directly from the first stages of the compressor (22).

In the second mode (mode 2) the air breathing engine (2) works as a turbomachine, generating thrust through the nozzle (25) in addition to the shaft power supplied in mode 1. This force can be employed to impulse the aircraft when low thrust is demanded (taxi), or to help air breathing main engines (12) when necessary (i.e. during takeoff, climb and descend phases, or in case of an engine failure).

In the third mode (mode 3) the air breathing engine (2) works solely as a turbofan, generating thrust through the nozzle (25), again when necessary (during takeoff, climbing, or in case of an main engine (12) failure).

The versatile power system, VPU, (1) additionally includes a motor (4) placed preferably nearby the landing gear and intended to drive the landing gear wheels (3). The motor (4) works both ways, turning counterclockwise or clockwise. This counterclockwise or clockwise spinning movement is transmitted through a motor shaft (14) and a mechanical drive (11) to the aircraft landing gear wheels (3), producing an aeroplane on-ground displacement forward or backward respectively.

The air breathing engine (2) supplies power to the power converter (6) through a mechanical drive (11). Power generated by the power converter (6) can be mechanic, electric, hydraulic or pneumatic power. This power generated by the power converter (6) is distributed to the aircraft power distribution grid (5) through power transmission means (13) well known in the state of the art (shafts, electric wires, and hydraulic or pneumatic pipes). Due to the fact that the power generated by the power converter (6) can be mechanic, electric, hydraulic or pneumatic power, the motor (4) which provides movement to the landing gear wheels (3) can also be mechanic, electric, hydraulic or pneumatic type.

On board equipment requires power supply to satisfy the aircraft energy loads; power supply is provided by the power distribution grid (5). The power transmission means (13) transfer power from the power converter (6) to the power distribution grid (5). Similarly, the power distribution grid (5) uses the power transmission means (13) for providing power supply to the aircraft systems (7) demanding power and other relevant elements like the motor (4) or an intake flap actuator (8). The intake flap actuator (8) opens the air intake (9) when the air breathing engine (2) is working; a mechanical drive (11) is used for opening the air intake (9), providing air supply (10) to the air engine (2). When the air breathing engine (2) is switched off, the VPS air intake (9) remains closed minimizing the aerodynamic drag.

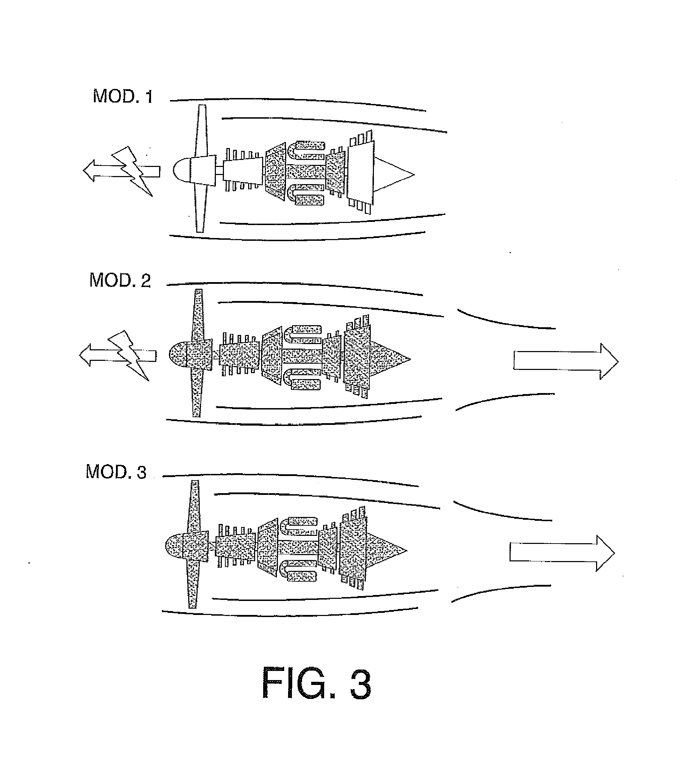

Therefore, the versatile power system (1) operation is selected for each stage of the flight, among the following modes:
A) mode 1, where the air breathing engine (2) works only as a turbo-shaft, driving the power converter (6) and providing shaft energy;
B) mode 2, where the air breathing engine (2) works as in mode 1 providing shaft power, and the air breathing engine (2) also generates thrust for the aircraft propulsion through the nozzle (25);
C) mode 3, where the air breathing engine (2) works as a turbofan, generating thrust through the nozzle (25).
These operating modes 1, 2 and 3 have been schematically represented in figure 3.

When power for the landing gear (3) wheel propulsion is required, the motor (4) needs a power supply that is provided by the power distribution grid (5), or even directly by the power converter (6). Power transmission means (13) supply the power requested by the motor (4). Afterwards the motor (4) transfers power to a mechanical drive (11), which moves a shaft (14) that makes the landing gear wheels (3) rotate. The motor shaft (14) can rotate either clockwise or counterclockwise, making the landing gear wheels (3) turn either clockwise or counterclockwise as well. This counterclockwise or clockwise turning movement produces the aircraft on-ground displacement forward or backward respectively.

During a typical mission, the aircraft equipped with the versatile power system (1) operates as follows:
a) Boarding and parking phase. During this stage the aircraft systems are powered by the VPS (1) working in mode 1. The aircraft main engines (12) are off.
b) Pushback phase when in gate. Pushback is achieved without the aid of towing tractors, just using the motor (4) which turns the landing gear wheels (3), moving the aircraft towards the taxiway. Aircraft main engines (12) are switched off and the motor (4) obtains power from the VPS (1) working in mode 1. The remaining power load required by the aircraft to operate is provided by the VPS (1) as well.
c) Taxi out phase. Aircraft main engines (12) remain switched off, and the propulsion is achieved due to the fact that the VPS (1) is working in mode 2, generating thrust through the nozzle (25) and providing movement to the landing gear wheels (3) by the motor (4) simultaneously. The remaining requirements on electrical, pneumatic or hydraulic power supply (or a combination of them) to other aircraft loads is provided by the VPS (1) as well. Afterwards air breathing main engines (12) are switched on extracting power from the air breathing engine (2), and air breathing main engines (12) start to warm up when the aircraft is reaching the runway head.
d) Takeoff and climb phases. The motor (4) is switched off and thrust is provided by main engines (12); according to propulsion requirements the air breathing engine (2) may also remain operative providing additional thrust (working in mode 3), or may be shut down.
e) Cruise and steady flight, descent phase and landing. The air breathing engine (2) is usually inoperative, unless some extra thrust is required (for instance, if there is an air breathing main engine (12) failure).
f) Taxi in phase. After landing the aircraft performs taxi in phase employing combined propulsion as during taxi out phase, i.e., from the VPS (1) at mode 2 and the motor (4) providing motion to the landing gear wheels (3). The air breathing main engines (12) are switched off.
g) The cycle finishes when the aircraft is in parking phase, as it has been disclosed in paragraph a).

Table 1 provides a complete understanding on the functionality of the air breathing main engines (12) and VPS (1) during the different flight phases. In table 1, "1" means "ON", and "0" means "OFF".

**Table 1 - Uses of the main engines and VPS during different flight phases**

| Flight phase | Main engines | VPS (VPU & motor on landing gear) | Motor on landing gear | VPU | operation | mode |
|---|---|---|---|---|---|---|
| | | | | Mode 1 Power generation | Mode 2 Thrust + power generation | Mode 3 Thrust |
| Gate | 0 | 1 | 0 | 1 | 0 | 0 |
| Pushback | 0 | 1 | 1 | 1 | 0 | 0 |
| Taxi out | 0 | 1 | 1 | 0 | 1 | 0 |
| Take off & climbing | 1 | 1/0 | 0 | 0 | 0 | 1/0 |
| Cruise | 1 | 0 | 0 | 0 | 0 | 0 |
| Descent & landing | 1 | 0 | 0 | 0 | 0 | 0 |
| Taxi in | 0 | 1 | 1 | 0 | 1 | 0 |

Some quantitative data can be provided for a versatile power system (1) installed in a two engine aircraft weighing around 80 tons. Such aircraft may comprise:
- a variable cycle twin spool air breathing engine (2) turbofan, which provides thrust in the range of 20-30 kN at sea level and shaft power in the range of 150-300 kW;
- an electric power converter (6) in the range of 150-300 kVA, driven by the engine through a mechanical drive, that supplies electric power to various aircraft systems;
- a series DC electric motor (4), in the range of 15-20 kW, placed nearby the landing gear, which is able to drive the landing gear wheels (3) by means of a reduction gearbox.

The motor (4) and the gearbox (not illustrated in the drawings) are designed and sized in order to provide the required torque (around 20 kN-m) to overcome breakaway force and the power (around 20 kW) to drive the aircraft backwards or forwards at typical pushback speed (usually lower than 6 km/h).

The thrust from the air breathing engine (2) may be around 20-30 kN; this value is enough to allow forward propulsion at conventional taxi speeds (around 30 knots) and acceleration levels.

The air breathing engine (2) works in three different modes as it has been mentioned:
- Mode 1: the air breathing engine (2) high pressure spool operates providing shaft power through a mechanical drive (11) while the low pressure spool is locked.
- Mode 2: the air breathing engine (2) provides thrust through its nozzle (25) and also power through a mechanical drive (11).
- Mode 3: the air breathing engine (2) provides thrust through its nozzle (25) in the same fashion a two spool turbofan would do.

The air breathing engine (2) receives air supply (10) through a couple of symmetric air intakes (9) placed in the lower part of the fuselage but slightly displaced to the sides. These air intakes (9) can be retracted in order to minimize aerodynamic impact when the versatile power system (1) is used.

For the considered solution the air breathing main engines of the aircraft can be reduced in size around 15% as compared to an aircraft without the versatile power system (1).

The previous data are given only as an illustrative example that allows one to understand the improvements achieved with the invention.

Therefore, the innovation of the abovementioned concept lies in the joint generation of thrust through the nozzle (25) and ground propulsive force to the wheels (3), based on the same power plant, the air breathing engine (2). This hybrid solution introduces the following advantages:
1) Reduction of fuel consumption during taxi phases as opposed to main engine (12) operation. This is due to the inefficiency of main engines (12) when they are working at low thrust rate.
2) There is an opportunity for downsizing air breathing main engines (12) as additional thrust is available for the most demanding mission phases. For the above mentioned example, the main engines of the aircraft can reduce their size around 15%.
3) There are synergies between the air breathing engine (2) and the motor (4) when using combined propulsion. The motor (4) has a low power rating (for the previous example, 20 kW), but it provides high torque (20 kN-m) at low speed, making it suitable to overcome breakaway resistance and low speed taxi (2 m/s). The thrust force (20-30 kN) from the air breathing engine (2) is almost constant for the whole speed range considered during taxi phase and is suitable for propulsion at higher speed (around 15 m/s).
4) The VPS (1) can provide power (mechanic, electric, hydraulic or pneumatic power), making the aircraft autonomous from external power sources when main engines (12) are not operating.
5) The VPS (1) can also provide thrust for propulsion in various mission phases including taxi, take off and climb, or emergency situation with one or two main engines (12) failed. The VPS (1) thrust rating allows for aircraft taxiing while main engines (12) are stopped.
6) The motor (4) installed in the landing gear wheels (3) can be used to drive the aircraft backwards or forward at low speed. The motor (4) design and performance allow the aircraft to perform pushback and breakaway (motion start from still) autonomously.

The present invention should not be seen as limited to the particular embodiment described herein. Other configurations can be achieved by those skilled in the art in view of the present description. Accordingly, the scope of the invention is defined by the following claims.

## Claims

1. An aircraft versatile power system (1) comprising,
• an air breathing engine (2), comprising a compressor (22), a combustion chamber (23), a turbine (24), and a nozzle (25), which supplies either thrust or shaft power, or both simultaneously;
• a power converter (6) that transforms mechanical energy from the shaft motion provided by the air breathing engine (2) into another type of energy (electric, hydraulic or pneumatic);
• a motor (4), which is able to move a motor shaft (14);
in that,
• the motor (4) uses the energy provided by the power converter (6) to move the motor shaft (14) either clockwise or counterclockwise;
• the motor shaft (14) turns landing gear wheels (3) clockwise or counterclockwise, producing the aircraft on-ground displacement forward or backward.

2. An aircraft versatile power system (1), according to claim 1, wherein the air breathing engine (2) operates in three different modes:
1) providing only power through a mechanical drive (11),
2) providing power through a mechanical drive (11), and also thrust through its nozzle (25),
3) providing only thrust through its nozzle (25).

3. An aircraft versatile power system (1) according to claims 1 or 2, wherein the power converter (6) transforms shaft motion from the air breathing engine (2) into electric energy.

4. An aircraft versatile power system (1) according to claims 1 or 2, wherein the power converter (6) transforms shaft motion from the air breathing engine (2) into hydraulic energy.

5. An aircraft versatile power system (1) according to claims 1 or 2, wherein the power converter (6) transforms shaft motion from the air breathing engine (2) into pneumatic energy.

6. An aircraft versatile power system (1) according to claims 3, 4 or 5 wherein the motor (4) is an electric motor, a hydraulic motor or a pneumatic motor.

7. An aircraft versatile power system (1) according to any previous claim 1 to 6, wherein the air breathing engine (2) is a turbojet.

8. An aircraft versatile power system (1) according to any previous claim 1 to 6, wherein the air breathing engine (2) is a turbofan.

9. An aircraft versatile power system (1) according to any previous claim, wherein the air breathing engine (2) has at least an air intake (9) that provides air supply (10) when open, and the air intake (9) presents no aerodynamic drag when it is closed.

10. A method to operate an aircraft, using a versatile power system (1) which comprises:
• an air breathing engine (2), comprising a compressor (22), a combustion chamber (23), a turbine (24), and a nozzle (25), which supplies either thrust or shaft power, or both simultaneously;
• a power converter (6), that transforms shaft motion into another type of energy;
• a motor (4), which is able to move a motor shaft (14) either clockwise or
counterclockwise;
where,
• the power converter (6) transforms mechanical energy from the shaft motion provided by the air engine (2) into another type of energy (electric, hydraulic or pneumatic);
• the motor (4) uses the energy provided by the power converter (6) to move the motor shaft (14) clockwise and counterclockwise;
• the motor shaft (14) turns the landing gear wheels (3) clockwise and counterclockwise, producing the aircraft on-ground displacement forward and backward;
**characterized in that** the versatile power system (1) operation is selected for each stage of the flight, among the following modes:
- mode 1, where the air breathing engine (2) works only as a turbo-shaft, driving the power converter (6) and providing shaft energy;
- mode 2, where the air breathing engine (2) works as in mode 1 providing shaft energy, and it also generates thrust through the nozzle (25); or,
- mode 3, where the air breathing engine (2) generates only thrust through the nozzle (25).

11. A method to operate an aircraft using a versatile power system (1) according to claim 10, wherein during the boarding, parking and disembarking phases the versatile power system (1) works in mode 1, providing power supply to the aircraft.

12. A method to operate an aircraft using a versatile power system (1) according to claim 10, wherein during the pushback phase the versatile power system (1) works in mode 1, providing power supply to the aircraft, and the aircraft is moved using the motor (4) which turns the landing gear wheels (3), moving the aircraft towards a taxiway.

13. A method to operate an aircraft using a versatile power system (1) according to claim 10, wherein during the taxiing phase the versatile power system (1) works in mode 2, providing power supply and thrust to the aircraft, and the aircraft is moved using the motor (4) and due to the thrust provided by the nozzle (25) as well.

14. A method to operate an aircraft using a versatile power system (1) according to claim 10, wherein during the take off and climb phases, the motor (4) is switched off and thrust is provided by air breathing main engines (12), and the air breathing engine (2) may either remain operative providing additional thrust (mode 3), or may be shut down.

15. A method to operate an aircraft using a versatile power system (1) according to claim 10, wherein during the cruise and descend flight the versatile power system (1) works in mode 3.
